# EUROPÄISCHE PATENTSCHRIFT

(11) **EP 4 116 046 B1**
(45) Veröffentlichungstag und Bekanntmachung des Hinweises auf die Patenterteilung: **28.01.2026**
(21) Anmeldenummer: 22181112.8
(22) Anmeldetag: 24.06.2022
(51) Int. Cl.: B25J 15/00, B25J 15/06, B65G 1/137, B65G 47/90, B65G 47/91

(54) **ENDEFFEKTOR MIT ARTIKELGREIFERN UND LADUNGSTRÄGERGREIFER**
END EFFECTOR WITH ARTICLE GRIPPERS AND CHARGE CARRIER GRIPPER
EFFECTEUR TERMINAL POURVU DE PRÉHENSEURS D'ARTICLE ET PRÉHENSEUR DE PORTE-CHARGE

(30) Priorität: 05.07.2021 DE 102021117261
(43) Veröffentlichungstag der Anmeldung: 11.01.2023
(73) Patentinhaber: IGZ Ingenieurgesellschaft für logistische Informationssysteme mbH, 95685 Falkenberg (DE)
(72) Erfinder: Zrenner, Dipl. Ing., Johann, 95685 Falkenberg (DE)
(74) Vertreter: Strehl & Partner mbB

(56) Entgegenhaltungen:
- WO-A1-2016/029299
- DE-A1- 102018 108 195
- DE-A1- 19 959 285
- JP-B2- 3 362 656

## Beschreibung

Die Erfindung betrifft ein Endeffektor für einen Kommissionierroboter nach dem Oberbegriff des Anspruchs 1.

Es ist aus verschiedenen Zusammenhängen bekannt, zum Handhaben von Produkten oder Artikeln Kommissionierroboter mit als Sauggreifern ausgestalteten Artikelgreifern zu nutzen. Auf dem Markt ist eine Vielzahl von verschiedenartigen Sauggreifern verfügbar, die für verschiedene Einsatzwecke optimiert sind, z.B. zum Greifen von Paketen, Apothekenartikeln, Beuteln oder Säcken, Stückgütern, Plattenmaterialien, Papier- oder Pappbögen.

Ferner sind Sauggreifer oder andere Ladungsträgergreifer zum Greifen von Quell- oder Zielbehältern eines Kommissioniervorgangs bekannt, insbesondere von Versandkartons. Diese sind nicht zum Greifen von typischen Artikeln mit Abmessungen von einigen Dezimetern, insbesondere von 2 - 50 cm, besonders vorteilhaft von 3 - 20cm und einem Gewicht in der Größenordnung von wenigen Gramm bis höchstens 5 kg, insbesondere von wenigen Gramm bis 1 kg geeignet, wie sie in typischen robotergestützten Logistiksystem für die automatisierte Kleinteilekommissionierung kommissioniert werden müssen. Ebenso sind typische Artikelgreifer nicht zum Greifen und Bewegen von Ladungsträgern bzw. Behältern geeignet.

Aus der EP3738719A1 ist ein mobiler Kommissionierroboter bekannt, der nachrüstbar oder austauschbar anstelle eines menschlichen Kommissionierers an einem Kommissionierarbeitsplatz eingesetzt werden kann, der zur Benutzung durch einen Menschen ausgelegt ist. An derartigen Kommissionierarbeitsplätzen werden Versandkartons als Zielbehälter in der Regel auf Regalen oder über Fördertechnikspuren bereitgestellt, die oberhalb des Stellplatzes angeordnet sind, auf dem der Zielbehälter während des eigentlichen Kommissioniervorgangs abgestellt wird. Der menschliche Kommissionierer nimmt einen der derart bereitgestellten Versandkarton von dem höher gelegenen Bereitstellungsplatz herunter und stellt in vor sich auf dem Stellplatz bzw. Arbeitstisch ab.

Dieser Vorgang des Bereitstellens von Zielbehältern kann von bisher bekannten Kommissionierrobotern nicht übernommen werden. Eine Umrüstung des Kommissionierplatzes mit Fördertechnik zum Antransport der Zielbehälter auf der gleichen Ebene ist aufwendig, aus platzgründen häufig nicht realisierbar und würde zudem die oft gewünschte Doppelnutzung des gleichen Platzes durch Roboter und Menschen nicht mehr möglich machen.

Aus der EP 2 708 335 A1 ist ein Hochgeschwindigkeits-Greiferwechselsystem bekannt, in dem ein Sauggreifer mit Magnetkraft an einem vorderen Endeffektor-Hauptkörper eines Knickarms eines Greifsystems befestigt werden kann.

Aus der WO 2012163666 A1 ist ein Kommissioniersystem zum automatisierten Kommissionieren von Artikeln mit einem Knickarmgreifer zum Aufnehmen des Artikels aus einem Behälter bekannt, wobei der Knickarmgreifer einen im Wesentlichen senkrecht stehenden Längsarm und einen um einen Knickwinkel abknickbaren Knickarm aufweist, an dem ein Sauggreifer zum Greifen des Artikels vorgesehen ist, wobei der Längsarm des Knickarmgreifers zumindest doppelt so lang, und insbesondere zumindest fünfmal so lang, wie der Knickarm des Knickarmgreifers ist. Dadurch soll ein besseres Greifen von insbesondere schräg in einem Winkel des Lagerbehälters liegenden Artikeln ermöglicht werden. Ein Umrüsten des Kommissioniersystems auf einen anderen Sauggreifertyp ist aber mit den oben genannten Schwierigkeiten verbunden.

Aus der DE 10 2010 002 317 B4 ist ein System zur Vereinzelung und Kommissionierung von Apothekenartikeln bekannt, das eine Handhabungseinrichtung zur separaten Entnahme von Artikeln von einer ersten Transporteinrichtung und deren Überführung auf eine zweite Transporteinrichtung umfasst, wobei die Handhabungseinrichtung mehrere Greif- und/oder Saugeinrichtungen aufweist, die abhängig von dem zu handhabenden Artikel ausgewählt werden können und die in einer Werkzeugrevolver-Anordnung am vorderen Endeffektor-Hauptkörper des Greifarms befestigt sind.

Aus der DE 10 2018 114 341 B3 ist ein Greifer mit mehreren an einem Grundkörper angeordneten Fingern bekannt. Aus der DD 246 723 A1 ist ein Greifer mit zwei in einem Winkel von 90° zueinander angebrachten Greifelementen bekannt.

Aus der EP 3738719A1 ist ein Kommissionierroboter mit einem verfahrbaren Sockel und einem auf dem Sockel angeordneten Greifarm zum Kommissionieren von Waren an einem Ware-zur-Person - Kommissionierarbeitsplatz bekannt.

Aus der DE 10 2019 110 516 B3 ist ein Endeffektor für Kommissionierroboter nach dem Oberbegriff des Anspruchs 1 bekannt. Der Endeffektor umfasst einen Endeffektor-Hauptkörper und einen Greiferträger mit zwei einander gegenüber liegenden Artikelgreifern, die durch eine Drehung des Greiferträgers aktivierbar oder deaktivierbar sind.

Weitere gattungsgemäße Endeffektoren sind aus den Dokumenten DE 10 2018 108 195 A1, JP 3 362656 B2, DE 10 2007 052 012 A1, DE 199 59 285 A1, EP 3 854 735 A1, WO 2016 / 029 299 A und WO 2005 / 019 072 A1 bekannt.

Der Erfindung liegt insbesondere die Aufgabe zugrunde, einen gattungsgemäßen Endeffektor, einen Kommissionierroboter mit einem solchen Endeffektor und ein Verfahren zum Kommissionieren mit einem Kommissionierroboter bereitzustellen, der ohne zeitaufwendigen Werkzeugwechsel nicht nur zum Kommissionieren von Artikeln sondern auch zur Bereitstellung von Quell- oder Zielbehältern genutzt werden kann.

Die Aufgabe wird gelöst durch einen Endeffektor mit den Merkmalen des Anspruchs 1, durch einen Kommissionierroboter mit den Merkmalen des Anspruchs 8 und durch ein Verfahren mit den Merkmalen des Anspruchs 9. Vorteilhafte Ausgestaltungen der Erfindung ergeben sich aus den Unteransprüchen.

Die Erfindung geht aus von einem Endeffektor für einen Kommissionierroboter mit einem länglichen Endeffektor-Hauptkörper und einem Artikelgreifer oder einem Greiferträger mit mehreren Artikelgreifern, wobei der Endeffektor-Hauptkörper ein proximales Ende zum Anschluss an einen Greifarm des Kommissionierroboters und ein distales Ende aufweist, wobei der Greifer oder Greiferträger an dem distalen Ende des Endeffektor-Hauptkörpers angeordnet ist.

Es wird vorgeschlagen, dass zwischen dem proximalen Ende und dem distalen Ende an einer in Längsrichtung des Endeffektor-Hauptkörpers verlaufenden Seitenfläche ein Ladungsträgergreifer zum Greifen von Quell- oder Zielbehältern vorgesehen ist. Dadurch kann ohne Greiferwechsel neben dem Kommissionieren von Artikeln aus bzw. in Quell- bzw. Zielbehälter auch das Bereitstellen und/oder Abräumen von Quell- bzw. Zielbehälter von einem mit dem Endeffektor ausgestatteten Kommissionierroboter übernommen werden und auf diese Weise können monotone Arbeiten automatisiert werden.

Die als Quell- oder Zielbehälter verwendeten Ladungsträger können je nach Anwendung Versandkartons, Kunststoffbehälter oder Metallbehälter sein.

Erfindungsgemäß wird vorgeschlagen, dass der Ladungsträgergreifer ein Sauggreifer ist, dessen Ansaugrichtung im Wesentlichen senkrecht zur Längsrichtung des Endeffektor-Hauptkörpers verläuft. Es sind jedoch auch Ausgestaltungen denkbar, die nicht zur Erfindung gehören und in denen der Ladungsträgergreifer ein Klauengreifer oder eine Kombination aus Klauen- und Sauggreifer oder auch ein Greifhaken ist, der in entsprechende Griffstrukturen am Behälter eingreifen kann. Für magnetisierbare oder mit Magneten ausgestattete Ladungsträger sind auch Magnetgreifer denkbar.

In einer Ausgestaltung der Erfindung wird vorgeschlagen, dass der Ladungsträgergreifer wenigstens zwei Sauggreifer umfasst. Dadurch kann ein stabiler Halt gewährleistet werden.

In einer Ausgestaltung der Erfindung wird vorgeschlagen, dass der Ladungsträgergreifer einen Greifhaken umfasst, der zum Eingriff in einen Handgriff oder eine Hinterschneidung des Quellladungsträgers oder Zielladungsträgers ausgelegt ist. Dadurch können Ladungsträger mit derartigen Griffstrukturen sicher gehalten und transportiert werden.

Erfindungsgemäß ist der Endeffektor dazu ausgelegt, beim Greifen von Quellladungsträgern oder Zielladungsträgern mit dem Ladungsträgergreifer einen Boden des Quellladungsträgers oder Zielladungsträgers mit dem Artikelgreifer anzusaugen und zu greifen. Durch die wenigstens zwei Greifpunkte wird ein stabiler Halt gewährleistet.

In einer vorteilhaften Ausgestaltung der Erfindung wird vorgeschlagen, dass innerhalb des Endeffektor-Hauptkörpers ein Ventil zum Umschalten einer Druck- oder Saugluftversorgung zwischen einer Betätigung des Artikelgreifers und einer Betätigung des weiteren Ladungsträgergreifers angeordnet ist. Dadurch kann eine separate Druckluftversorgung bzw. ein separater Druckluftanschluss an der Schnittstelle zwischen Endeffektor und Greifarm des Kommissionierroboters vermieden werden. Es ist aber auch denkbar, dass separate Druckluftanschlüsse für die beiden Greifer vorgesehen sind.

Der Artikelgreifer und der Ladungsträgergreifer können über getrennte Druck- oder Saugluftversorgungen von der Steuereinheit angesteuert werden und auf diese Weise besonders flexibel steuerbar sein, insbesondere zum gleichzeitigen Greifen einer Seitenwand des Ladungsträgers mit dem Ladungsträgergreifer und eines Bodens mit dem Artikelgreifer. In einer alternativen Ausgestaltung der Erfindung wird vorgeschlagen, dass der Greiferträger über ein Dreh- oder Schwenklager um eine quer zur einer Längsrichtung des Endeffektor-Hauptkörpers verlaufende Dreh- oder Schwenkachse dreh- oder schwenkbar an dem Endeffektor-Hauptkörper angeordnet ist. Der Endeffektor ist insbesondere zur Montage am Ende eines Roboterarms ausgelegt, der den Endeffektor um seine Längsachse drehen kann. Alternativ kann der Endeffektor selbst einen rotatorischen Freiheitsgrad aufweisen, der eine Drehung zumindest seines Endbereichs um die Längsachse erlaubt. Dabei kann insbesondere am distalen Ende des Endeffektor-Hauptkörpers ein Greiferträger mit wenigstens zwei Artikelgreifern angeordnet sein, die insbesondere durch eine Drehung des Greiferträgers oder durch ein schaltbares Ventil aktivierbar oder deaktivierbar sein können. Dadurch kann die Flexibilität des Endeffektors weiter verbessert werden.

In einer besonders vorteilhaften Ausgestaltung der Erfindung umfasst der Endeffektor genau zwei Artikelgreifer, die in bezogen auf die horizontale Dreh- oder Schwenkachse einander gegenüber liegenden Positionen auf dem Greiferträger angeordnet sind. Dadurch kann der jeweils inaktive Artikelgreifer maximal weit aus dem Arbeitsbereich des aktiven Artikelgreifers herausgeschwenkt werden und Kollisionen mit Behälterwänden können vermieden werden.

Der Endeffektor kann konstruktiv einfach an verschiedene Typen von Ladungsträgern angepasst werden, da in einer vorteilhaften Ausgestaltung am Endeffektor-Hauptkörper eine Schnittstelle zum Anschluss verschiedener Arten von Ladungsträgergreifern vorgesehen ist.

Ein weiterer Aspekt der Erfindung betrifft einen Kommissionierroboter mit einem Endeffektor der oben beschriebenen Art und einer Steuereinheit, wobei die Steuereinheit dazu ausgelegt ist, einen Kommissionierauftrag zu empfangen, mit dem Ladungsträgergreifer einen Zielbehälter von einer Fördertechnikspur auf einen Kommissionierplatz zu stellen und anschließend mit dem Artikelgreifer Artikel gemäß dem Kommissionierauftrag einem oder mehreren Quellbehältern zu entnehmen und in den oder die Zielbehälter zu legen.

Ein weiterer Aspekt der Erfindung betrifft ein Verfahren zum Kommissionieren, das den Kommissionierroboter der oben beschriebenen Art benutzt. Das Verfahren umfasst das Empfangen eines Kommissionierauftrags, das Greifen eines auf einer Fördertechnikspur bereitstehenden Zielbehälters mit dem Ladungsträgergreifer und Abstellen des Zielbehälters auf einen Kommissionierplatz, das Entnehmen von Artikeln gemäß dem Kommissionierauftrag einem oder mehreren Quellbehältern mit dem Artikelgreifer und Ablegen der Artikel in den oder die Zielbehälter.

Ferner wird vorgeschlagen, dass eine Saug- oder Druckluftleitung zum Bereitstellen der Saugluft oder Druckluft für die Artikelgreifer durch das Dreh- oder Schwenklager geführt ist, wobei bei Drehbewegungen des Greiferträgers innerhalb des vorgegebenen Winkelintervalls eine Verbindung zwischen dem jeweils aktiven Artikelgreifer und der Saug- oder Druckluftleitung besteht bzw. bestehen bleibt.

Dadurch, dass der Artikelgreifer über ein freies Ende des Endeffektor-Hauptkörpers hinausragt, können auch tief in einem Behälter liegende Artikel oder Produkte gut gegriffen werden und eine Störkontur des Endeffektor-Hauptkörpers wird minimiert. Durch die drehbare Lagerung werden gleichzeitig mit dem Herausdrehen eines Artikelgreifers der oder die anderen Artikelgreifer in eine in Richtung des proximalen Endes des Endeffektor-Hauptkörpers gedreht, wodurch sie geschützt vor Kollisionen sind und den Prozess nicht stören.

In einer vorteilhaften Ausgestaltung der Erfindung umfassen die mehreren Artikelgreifer wenigstens zwei Artikelgreifer mit unterschiedlichen Charakteristika. Die unterschiedlichen Artikelgreifer können sich neben dem Durchmesser auch in anderen Parametern unterscheiden, z.B. Material, Art und Spezifikationen des Balgs, Tragkraft, Oberfläche etc., Artikelgreifer, die optimiert sind für Beutel, Kartonagen oder Metall. Die Artikelgreifer können austauschbar an dem Greiferträger angeordnet sein.

In einer Ausgestaltung des erfindungsgemäße Kommissionierroboters wird vorgeschlagen, dass die Bildverarbeitungsvorrichtung oder eine sonstige Sensorik dazu ausgelegt ist, einen Ladungsträgertyp und eine Position oder Orientierung des zu greifenden Ladungsträgers auf einem Bereitstellungsplatz zu erfassen und dass die Steuereinheit dazu ausgelegt ist, abhängig von dem Ladungsträgertyp und dessen Position einen geeigneten Greifpunkt für den Ladungsträgergreifer zu ermitteln.

Die Artikelgreifer und Ladungsträgergreifer eines erfindungsgemäßen Endeffektors sind nicht auf Sauggreifer beschränkt. Der Greiferträger kann neben oder anstatt Saugköpfen auch andersartige Artikelgreifer umfassen, beispielsweise Klauengreifer, die über die Saug- oder Druckluftleitung hydraulisch oder pneumatisch betätigbar sind, oder auch Magnetgreifer, wobei der Magnetgreifer z.B. an einer dem Artikelgreifer gegenüberliegenden Position am Greiferträger angeordnet sein kann. Der Magnetgreifer kann passiv über Schleifkontakte/Kontaktstreifen aktiviert werden, die einen Elektromagneten des Magnetgreifers in bestimmten Winkelintervallen des Greiferträgers mit einem Stromkreis verbinden. Der Magnetgreifer kann zum Greifen metallischer, insbesondere magnetisierbarer Artikel genutzt werden.

Weitere Merkmale und Vorteile ergeben sich aus der folgenden Figurenbeschreibung.

Dabei zeigen:
Fig. 1 ein Kommissioniersystem mit einem Kommissionierroboter nach einem ersten Ausführungsbeispiel der Erfindung;
Fig. 2 einen Endeffektor nach dem ersten Ausführungsbeispiel der Erfindung mit einem Endeffektor-Hauptkörper, einem rotierenden Greiferträger mit zwei Artikelgreifern und einem Ladungsträgergreifer;
Fig. 3 eine schematische Schnittdarstellung des Endeffektors nach Fig. 2;
Fig. 4 eine schematische Darstellung des Kommissioniersystems gemäß Fig. 1 in einer Draufsicht;
Fig. 5a - 5f eine schematische Darstellung verschiedener Schritte eines erfindungsgemäßen Kommissionierverfahrens;
Fig. 6a eine alternative Ausgestaltung eines erfindungsgemäßen Endeffektors mit einem einzelnen Artikelgreifer;
Fig. 6b eine weitere alternative Ausgestaltung eines erfindungsgemäßen Endeffektors mit einem einzelnen, als Sauggreifer ausgestalteten Artikelgreifer und zwei Sauggreifern als Ladungsträgergreifer;
Fig. 7 eine weitere alternative Ausgestaltung eines erfindungsgemäßen Endeffektors mit einem Ladungsträgergreifer, der einen Sauggreifer und einen Greifhaken umfasst;
Fig. 8 eine weitere alternative Ausgestaltung eines erfindungsgemäßen Endeffektors mit einem Ladungsträgergreifer, der als Greifhaken ausgestaltet ist;
Fig 9 eine weitere alternative Ausgestaltung eines erfindungsgemäßen Endeffektors mit einem Ladungsträgergreifer, der einen Greifhaken und zwei Sauggreifer umfasst in einer Seitenansicht; und
Fig. 10 den Endeffektor aus Fig. 9 in einer Schrägansicht.

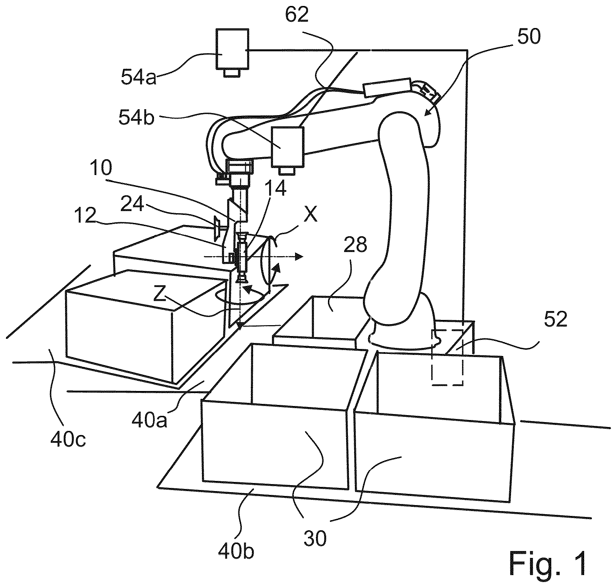

Fig. 1 zeigt ein Kommissioniersystem an einem Kommissionierarbeitsplatz mit einem mobilen Kommissionierroboter 50, einer Steuereinheit 52 und einem Kamerasystem mit einer ersten Kamera 54a und einer zweiten Kamera 54b nach einem ersten Ausführungsbeispiel der Erfindung. Die Steuereinheit 52 erfasst über das Kamerasystem die Position und/oder Lage sowie den Typ von Artikeln, Produkten oder Gegenständen, die in von einer Fördertechnik an- und/oder abtransportierten Quellbehältern 28 liegen und legt Artikel Zielbehältern 30 ab. Dazu nutzt das Kommissioniersystem den Kommissionierroboter 50, der mit einem erfindungsgemäßen Endeffektor 10 ausgestattet ist. Der Endeffektor 10 ist am Ende bzw. der Hand eines Knickarms des Kommissionierroboters 50 befestigt und kann dort über einen rotatorischen Freiheitsgrad Z des Kommissionierroboters 50 um seine Längsachse Z rotiert werden.

Der Kommissionierarbeitsplatz ist, wenn der mobile, auf Rollen verfahrbare Kommissionierroboter 50 entfernt wurde, als Kommissionierarbeitsplatz für einen Menschen nutzbar und ergonomisch im Hinblick auf die Höhe der Fördertechnik bzw. Stellplätze für die Quellbehälter 28 und Zielbehälter 30 auf die Größe eines erwachsenen Menschen angepasst.

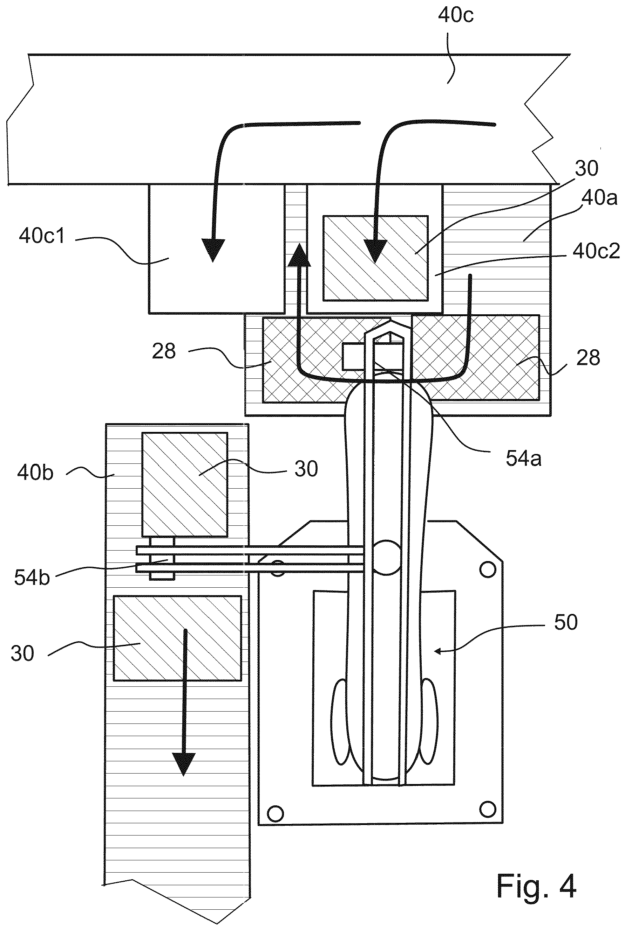

Die Quellbehälter 28 werden, wie in Fig. 4 besser erkennbar, über eine erste Fördertechnik 40a auf Tischhöhe aus einen automatisierten Hochregallager oder dergleichen angedient und wieder abtransportiert. Dazu umfasst die erste Fördertechnik 40a zwei parallel verlaufende Rollenbahnen, die am Stirnende durch einen quer verlaufenden Andienbereich verbunden sind.

Die Zielbehälter 30, die in diesem Beispiel Versandkartons sind, werden auf einer zweiten Fördertechnik 40b aufgestellt und abtransportiert. Die zweite Fördertechnik 40b umfasst nur eine seitlich neben dem Kommissionierroboter 50 verlaufende Rollenbahn und bildet einen Stellplatz bzw. Kommissionierplatz für die Zielbehälter 30.

Aufgrund der ergonomischen Anforderungen für einen menschlichen Kommissionierer sind die erste und die zweite Fördertechnik 40a, 40b auf einer Höhe angeordnet, die es einem stehend oder auf einem Stehhocker arbeitenden Kommissionierer erlauben, bequem in die darauf aufgestellten Quellbehälter 28 und Zielbehälter 30 einzugreifen, d.h. etwa auf der Höhe eines gewöhnlichen Tischs oder etwas darunter, ca. 60 - 90 cm, insbesondere 75 cm.

Die Zielbehälter 30 sind in dem in Fig. 1 dargestellten Ausführungsbeispiel Versandkartons aus Pappe, die zentral an einem Arbeitsplatz aufgeklappt bzw. aufgestellt werden und durch eine dritte Fördertechnik 40c auf Bereitstellungsplätzen 40c1, 40c2 für den Kommissionierer bereitgestellt werden, so dass dieser sie bequem erreichen und bei Bedarf als Zielbehälter 30 auf die zweite Fördertechnik 40b aufstellen kann. Aus Platzgründen sind die dritte Fördertechnik 40c und die Bereitstellungsplätze 40c1, 40c2 auf einer höheren Ebene als die erste Fördertechnik 40a und die zweite Fördertechnik 40b angeordnet. In der in Fig. 4 dargestellten Draufsicht ist die erste Fördertechnik 40a daher teilweise durch die dritte Fördertechnik 40c und die Bereitstellungsplätze 40c1, 40c2 verdeckt.

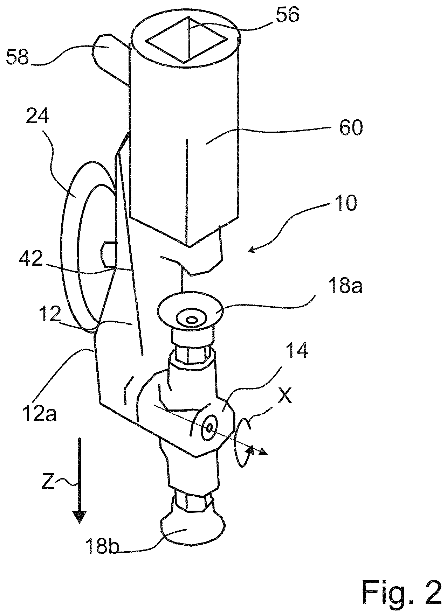

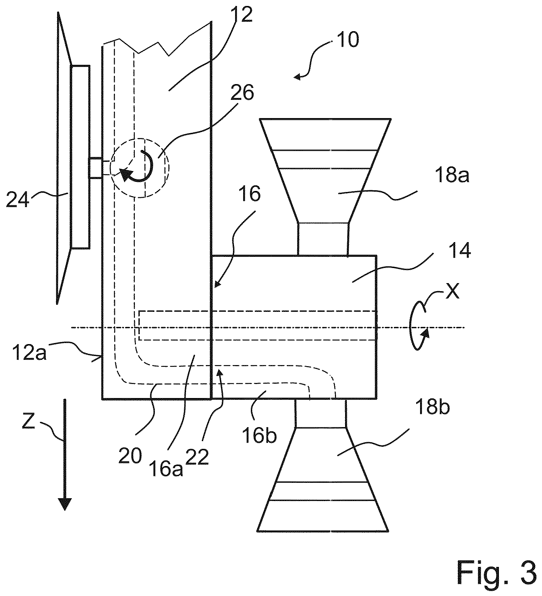

Der in Fig. 2 und 3 detaillierter dargestellte Endeffektor 10 umfasst einen länglichen Endeffektor-Hauptkörper 12 und einem an einem distalen Ende des Endeffektor-Hauptkörpers 12 angeordneten Greiferträger 14, der gegenüber dem Endeffektor-Hauptkörper 12 um eine Drehachse X drehbar ist, die senkrecht zur Längs- und Drehachse Z des Endeffektor-Hauptkörpers 12 verläuft. An dem Greiferträger 14 sind verschiedene Artikelgreifer 18a, 18b angeordnet, die durch Drehen des Greiferträgers 14 ausgewählt bzw. aktiviert werden können. Über Schläuche 62 (Fig. 1) an seinem proximalen Ende wird der Endeffektor 10 mit Druck- oder Saugluft versorgt, um die als Sauggreifer ausgestalteten Artikelgreifer 18a, 18b (Fig. 4) betätigen zu können. Über eine Schnittstelle am Ende des Roboterarms empfängt der Endeffektor 10 Signale zum Drehen des Greiferträgers 14 um die Drehachse X.

Zu weiteren Details des Kommissioniersystems wird auf die EP 3738719 A1 verwiesen, deren Inhalt durch Bezugnahme in die Offenbarung dieser Beschreibung aufgenommen wird.

Die Steuereinheit 52 ist durch eine Software dazu ausgelegt, einen Drehwinkel des Endeffektor-Hauptkörpers 12 um die Z-Achse und des Greiferträgers 14 um die X-Achse abhängig von der erfassten Position und Lage des Artikels und von Ladungsträgerwänden des Ladungsträgers 30 einzustellen.

Der Endeffektor 10 umfasst an seinem proximalen Ende eine Schnittstelle 56 zum Anschluss an den Roboterarm, einen Anschluss 58 für die Saugluft oder Druckluft und eine Signalleitung sowie ein Gehäuse 60 für einen Antriebsmotor.

Zwischen dem proximalen Ende und dem distalen Ende an einer in Längsrichtung des Endeffektor-Hauptkörpers 12 verlaufenden Seitenfläche 12a des Endeffektor-Hauptkörpers ist erfindungsgemäß ein Ladungsträgergreifer 24 zum Greifen von Quell- oder Zielbehältern 28, 30 vorgesehen. In dem in Fig. 1 dargestellten Ausführungsbeispiel ist der Ladungsträgergreifer 24 zum Greifen von als Versandkartons verwendeten Zielbehältern 30 ausgelegt. Der Ladungsträgergreifer 24 ist ein Sauggreifer, dessen Ansaugrichtung im Wesentlichen senkrecht zur Längsrichtung Z des Endeffektor-Hauptkörpers 12 und zur Ansaugrichtung der beiden Artikelgreifer 18a, 18b verläuft.

Wie in Fig. 3 erkennbar umfasst der Endeffektor 10 ferner ein Drehlager 16, über welches der Greiferträger 14 drehbar an einen Endeffektor-Hauptkörper 12 angeschlossen ist. Der Greiferträger 14 umfasst zwei mit Saugluft oder Druckluft betätigbare Artikelgreifer 18a, 18b und eine Saug- oder Druckluftleitung 20 zum Bereitstellen der Saugluft für die Artikelgreifer 18a, 18b.

Das Drehlager 16 umfasst zwei gegeneinander drehbare Lagerkörper 16a, 16b, die gleichzeitig eine Drehdurchführung für die Saugluft oder Druckluft und einen Ventilmechanismus 22 zum Herstellen und Trennen einer Verbindung zwischen der Saug- oder Druckluftleitung 20 und jeweils einem durch Verändern der Drehlage der Lagerkörper 16a, 16b wählbaren Artikelgreifer 18a, 18b bilden.

Zu weiteren konstruktiven Details des Greiferträgers, z.B. zum Antrieb und zur Luftdurchführung, wird auf die DE 10 2019 110 516 B3 verwiesen, deren diesbezüglicher Inhalt Teil der Offenbarung der vorliegenden Erfindung ist.

Innerhalb des Endeffektor-Hauptkörpers 12 ist ein von der Steuereinheit 52 über die Signalleitung betätigbares Ventil 26 (Fig. 3) zum Umschalten einer Druck- oder Saugluftversorgung zwischen einer Betätigung des jeweils aktiven Artikelgreifers 18a, 18b und einer Betätigung des Ladungsträgergreifers 24 angeordnet. Das Ventil 26 kann als Magnetventil oder Drehschieberventil ausgestaltet sein oder auch über einen Berührungssensor aktivierbar sein, der reagiert, sobald der Ladungsträgergreifer 24 einen Zielbehälter berührt. Alternativ können auch zwei Druckluftversorgungen für die beiden Greifer vorgesehen sein, die von der Steuerung 52 ein- und ausgeschaltet werden können.

Nach der Erfindung ist die Steuereinheit 52 des Kommissionierroboters dazu ausgelegt, einen Kommissionierauftrag zu empfangen, mit dem Ladungsträgergreifer 24 einen Zielbehälter von der dritten Fördertechnikspur 40c bzw. dem Bereitstellungsplatz 40c1, 40c2 auf einen Kommissionierplatz bzw. die zweite Fördertechnikspur 40b zu stellen und anschließend mit dem Artikelgreifer 18a, 18b Artikel gemäß dem Kommissionierauftrag aus Quellbehältern 28 zu entnehmen und in den Zielbehälter 30 zu legen.

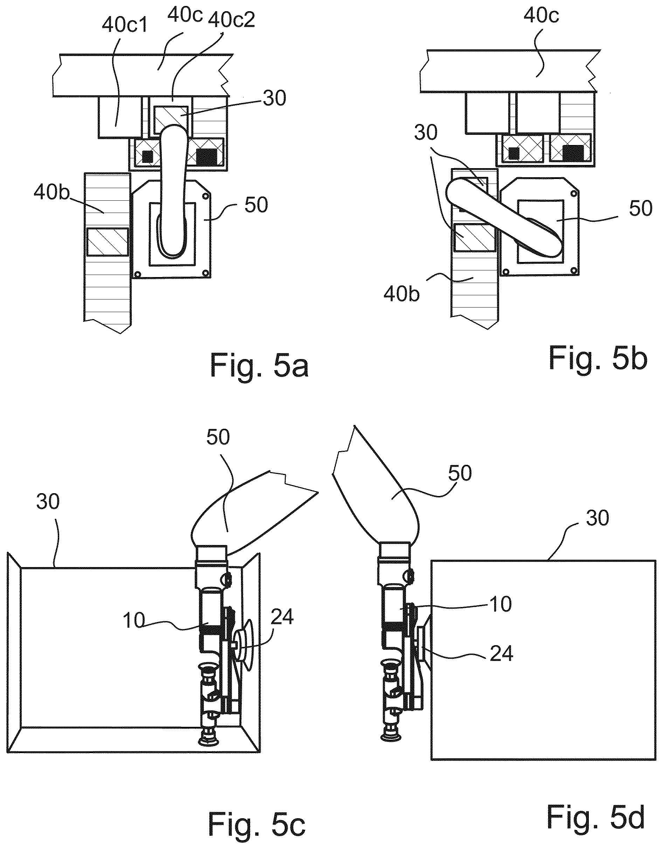

Das in die Steuereinheit 52 implementierte Verfahren zum Kommissionieren, das den Kommissionierroboter der oben beschriebenen Art benutzt, ist in den Figuren 5a - 5f detaillierter dargestellt.

Nach dem Empfangen eines Kommissionierauftrags wird der Kommissionierroboter 50 so gesteuert, dass er mit Hilfe des Ladungsträgergreifers 24 (Fig. 2) einen oder mehre auf den Bereitstellungsplätzen 40c1, 40c2 der dritten Fördertechnikspur bereitstehenden Zielbehälter 30 greift (Fig. 5a) und den gegriffenen Zielbehälter 30 auf einen Kommissionierplatz auf der zweiten Fördertechnikspur 40b abstellt (Fig. 5b). Im Fall von Multi-Order-Kommissionieraufträgen können die in Fig. 5a und Fig. 5b dargestellten Schritte für jeden Zielbehälter 30 wiederholt werden.

Um beim anschließenden, eigentlichen Kommissionieren kurze Wege zu ermöglichen, werden die Zielbehälter 30 auf der zweiten Fördertechnik 40b möglichst nahe am Sockel des Kommissionierroboters 50 aufgestellt. Dazu greift der Kommissionierroboter 50 insbesondere größere Ladungsträger 30 an deren Innenwand, wie dies in Fig. 5c dargestellt ist, da ansonsten beim Andocken des Ladungsträgergreifers 24 an einer dem Sockel des Kommissionierroboters 50 zugewandten Außenwand des Ladungsträgers 30 wegen der Breite des Endeffektors 10 ein Zwischenraum zwischen Ladungsträger 30 und Sockel bleiben müsste. Der Artikelgreifer 18a kann beim in Fig. 5c dargestellten Greifen von Innen zusätzlich den Boden des Ladungsträgers 30 greifen und so einen besonders stabilen Halt gewährleisten. Insbesondere bei kleineren Ladungsträgern 30 kann der Komissionierroboter 50 den Ladungsträger auch durch Andocken des Ladungsträgergreifers 24 an der dem Sockel des Kommissionierroboters 50 abgewandten Außenwand des Ladungsträgers 30 greifen, wie dies in Fig. 5d dargestellt ist.

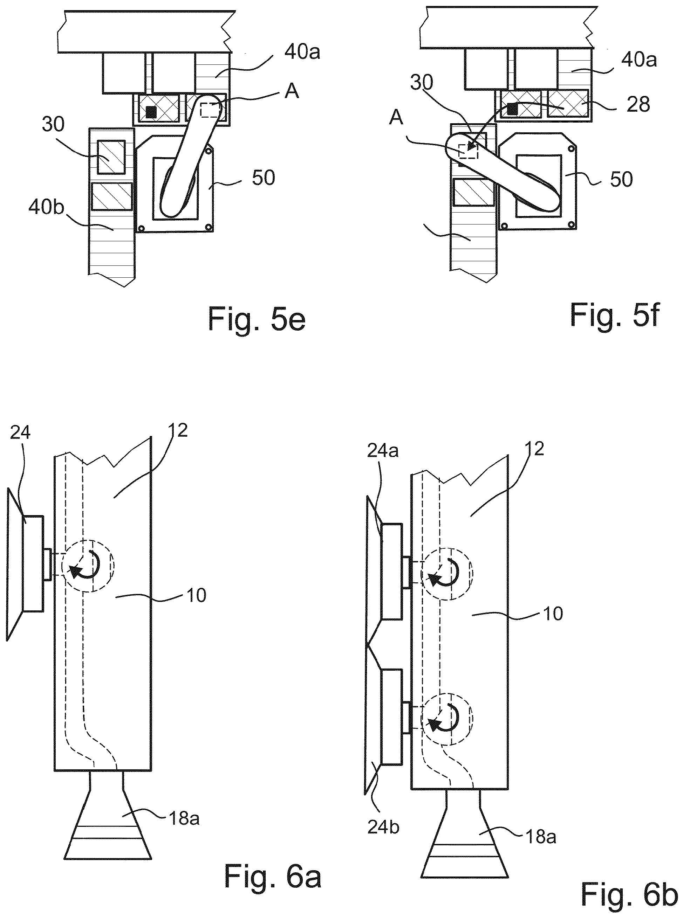

Nach dem Aufstellen der Zielbehälter 30 beginnt der eigentliche Komissioniervorgang mit dem Entnehmen von Artikeln A gemäß dem Kommissionierauftrag aus den Quellbehältern 28 (Fig. 5e) mit dem Artikelgreifer 18a, 18b und Ablegen der Artikel A in den entsprechenden Zielbehälter 30, ebenfalls mit dem Artikelgreifer 18a, 18b (Fig. 5f), wobei von der ersten Fördertechnik 40a jeweils die benötigten Quellbehälter 28 automatisiert angedient werden.

Die aus Steuereinheit 52 und Kamerasystem bestehende Bildverarbeitungsvorrichtung ist dazu ausgelegt, eine Position und Orientierung des Artikels und z.B. eine Artikelnummer zu ermitteln. Die Artikelnummer ist in der Regel für den jeweils angedienten Quellbehälter 28 bekannt, wobei eine zusätzliche Kontrolle durch die Bildverarbeitung erfolgen kann. Die Steuereinheit 52 ist dazu ausgelegt, abhängig von dem erfassten Artikeltyp einen für den Artikeltyp geeigneten Artikelgreifer 18a, 18b auszuwählen und in eine aktive Position zu drehen. Dazu greift die Steuereinheit 52 insbesondere auf Stammdaten des Artikels in einer Datenbank zurück, in der Gewicht, Oberflächenstruktur, Artikelform, weitere Artikeleigenschaften, und ggf. auch ein zu verwendender Artikelgreifer 18a, 18b hinterlegt sind.

Gleichzeitig werden von der dritten Fördertechnik 40c neue Zielbehälter 30 auf den Bereitstellungsplätzen 40c1, 40c2 bereitgestellt. Nach Abschluss des Kommissionierauftrags werden die Zielbehälter 30 zur weiteren Verarbeitung, bzw. zum Versand mit der zweiten Fördertechnik 40b abtransportiert.

Fig. 6a zeigt eine alternative Ausgestaltung eines erfindungsgemäßen Endeffektors 10 mit einem einzelnen Artikelgreifer 18a d.h. ohne drehbaren Greiferträger.

Fig. 6b zeigt eine weitere alternative Ausgestaltung eines erfindungsgemäßen Endeffektors 10 mit zwei horizontal übereinander angeordneten Sauggreifern 24a, 24b als Ladungsträgergreifer. Durch die Anordnung von zwei Sauggreifern übereinander kann ein horizontales Kippmoment, das beim Greifen der Seitenwand eines Ladungsträgers zwangsläufig auftritt, abgestützt werden.

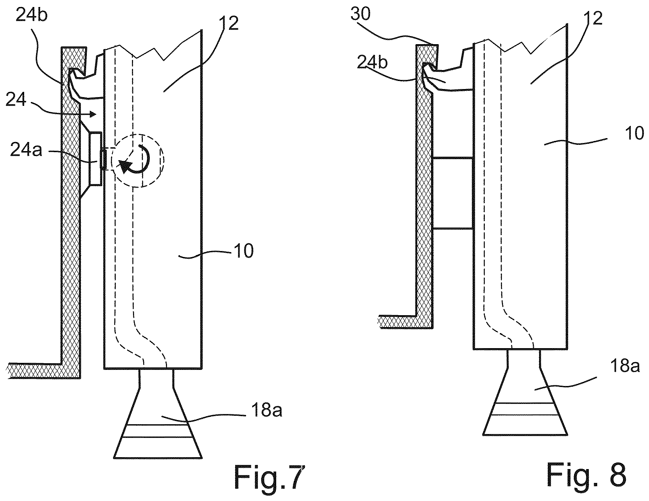

Fig. 7 zeigt eine weitere alternative Ausgestaltung eines erfindungsgemäßen Endeffektors 10 mit einem Ladungsträgergreifer 24, der einen Sauggreifer 24a und einen Greifhaken 24b umfasst. Der Endeffektor aus Fig. 7 ist zum Handhaben von Ladungsträgern 30 ausgelegt und geeignet, die einen Handgriff 30a oder eine Hinterschneidung aufweisen, in welche der Greifhaken 24b eingreifen kann, wobei der Sauggreifer 24a den Halt weiter stabilisiert.

Fig. 8 zeigt eine weitere alternative Ausgestaltung eines erfindungsgemäßen Endeffektors 10 mit einem Ladungsträgergreifer 24, der als Greifhaken 24b ausgestaltet ist. Der Endeffektor 10 aus Fig. 8 ist zum Handhaben von Ladungsträgern 30 ausgelegt und geeignet, die einen Handgriff 30a oder eine Hinterschneidung aufweisen, in welche der Greifhaken 24b eingreifen kann.

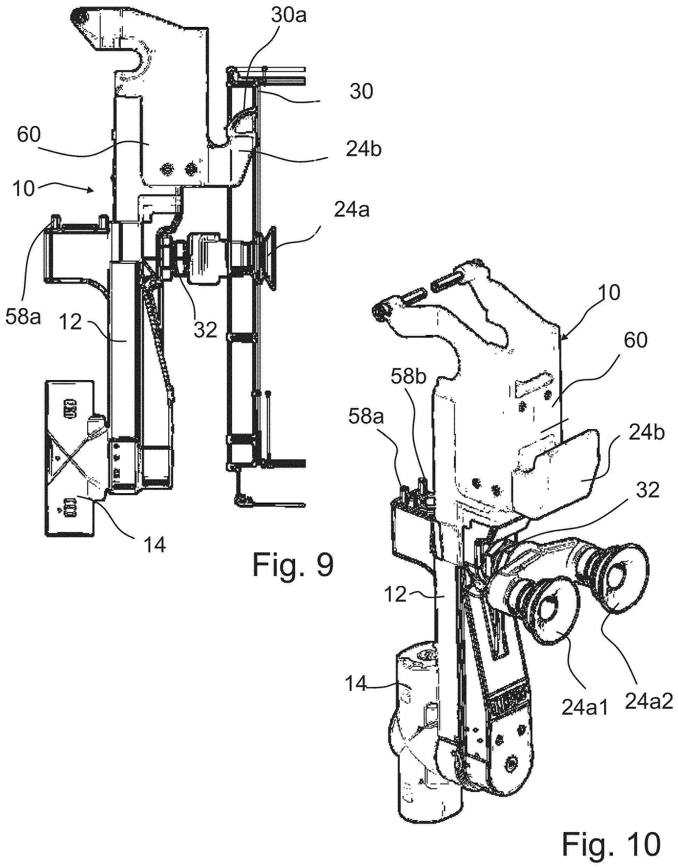

Fig 9 zeigt eine weitere alternative Ausgestaltung eines erfindungsgemäßen Endeffektors 18 mit einem Ladungsträgergreifer 24, der einen Greifhaken 24b und zwei Sauggreifer 24a1, 24a2 umfasst in einer Seitenansicht und Fig. 10 zeigt den Endeffektor aus Fig. 9 in einer Schrägansicht. Der Greifhaken 24b und zwei Sauggreifer 24a1, 24a2 bilden drei in einem Dreieck angeordnete Greifpunkte, so dass der Ladungsträger 30 stabil und auch in horizontaler Richtung kipp- bzw. verschwenksicher gehalten wird.

Der Artikelgreifer 18a, 18b (in Fig. 9 und 10 nicht am Greiferträger 14 montiert) und der Ladungsträgergreifer 24 können über getrennte Druck- oder Saugluftversorgungen 58a, 58b von der Steuereinheit 52 angesteuert werden und sind auf diese Weise besonders flexibel steuerbar.

Der Endeffektor 10 umfasst am Endeffektor-Hauptkörper 12 eine universelle Schnittstelle 32 zum Anschluss verschiedener Arten von Ladungsträgergreifern 24. Die Schnittstelle 32 umfasst einen Druck- oder Saugluftanschluss und eine Montage-Grundplatte für Greifhaken 24b.

### Bezugszeichenliste

Endeffektor 10
Endeffektor-Hauptkörper 12
Seitenfläche 12a
Greiferträger 14
Drehlager 16
Lagerkörper 16a, 16b
Artikelgreifer 18a, 18b
Druckluftleitung 20
Ventilmechanismus 22
Ladungsträgergreifer 24
Ventil 26
Quellbehälter 28
Zielbehälter 30
Schnittstelle 32
Erste Fördertechnik 40a
Zweite Fördertechnik 40b
Dritte Fördertechnik 40c
Bereitstellungsplatz 40c1, 40c2
Kommissionierroboter 50
Steuereinheit 52

## Patentansprüche

1. Endeffektor für einen Kommissionierroboter mit einem länglichen Endeffektor-Hauptkörper (12) und einem Artikelgreifer (18a) oder einem Greiferträger (14) mit mehreren Artikelgreifern (18a, 18b), wobei der Endeffektor-Hauptkörper (12) ein proximales Ende zum Anschluss an einen Greifarm des Kommissionierroboters und ein distales Ende aufweist, wobei der Artikelgreifer (18a) oder Greiferträger (14) an dem distalen Ende des Endeffektor-Hauptkörpers (12) angeordnet ist,
wobei zwischen dem proximalen Ende und dem distalen Ende an einer in Längsrichtung (Z) des Endeffektor-Hauptkörpers (12) verlaufenden Seitenfläche (12a) ein Ladungsträgergreifer (24) zum Greifen von Quellladungsträgern (28) oder Zielladungsträgern (30) vorgesehen ist, wobei der Ladungsträgergreifer (24) wenigstens einen Sauggreifer (24a) umfasst, **dadurch gekennzeichnet, dass** die Ansaugrichtung des Sauggreifers (24a) im Wesentlichen senkrecht zur Längsrichtung (Z) des Endeffektor-Hauptkörpers (12) und zur Seitenfläche (12a) hin verläuft, so dass gleichzeitig der Ladungsträgergreifer (24) eine Innenwand und der Artikelgreifer (18a) zusätzlich einen Boden von Quellladungsträgern (28) oder Zielladungsträgern (30) greifen kann.

2. Endeffektor nach Anspruch 1,
**dadurch gekennzeichnet, dass** der Ladungsträgergreifer (24) wenigstens zwei Sauggreifer (24a1, 24a2) umfasst.

3. Endeffektor nach einem der vorhergehenden Ansprüche,
**dadurch gekennzeichnet, dass**
der Ladungsträgergreifer (24) einen Greifhaken (24b) umfasst, der zum Eingriff in einen Handgriff (30a) oder eine Hinterschneidung des Quellladungsträgers (28) oder Zielladungsträgers (30) ausgelegt ist.

4. Endeffektor nach einem der vorhergehenden Ansprüche,
**dadurch gekennzeichnet, dass**
am distalen Ende des Endeffektor-Hauptkörpers (12) ein Greiferträger (14) mit wenigstens zwei Artikelgreifern (18a, 18b) angeordnet ist, die durch eine Drehung des Greiferträgers (14) aktivierbar oder deaktivierbar sind.

5. Endeffektor nach Anspruch 4,
**dadurch gekennzeichnet, dass**
genau zwei Artikelgreifer (18a, 18b) in bezogen auf die horizontale Dreh- oder Schwenkachse (X) einander gegenüber liegenden Positionen auf dem Greiferträger (14) angeordnet sind.

6. Endeffektor nach einem der vorhergehenden Ansprüche,
**dadurch gekennzeichnet, dass**
am Endeffektor-Hauptkörper (12) eine Schnittstelle (32) zum Anschluss verschiedener Arten von Ladungsträgergreifern vorgesehen ist.

7. Endeffektor nach einem der vorhergehenden Ansprüche,
**dadurch gekennzeichnet, dass**
innerhalb des Endeffektor-Hauptkörpers (12) ein Ventil (26) zum Umschalten einer Druck- oder Saugluftversorgung zwischen einer Betätigung des Artikelgreifers (18a, 18b) und einer Betätigung des Ladungsträgergreifers (24) angeordnet ist.

8. Kommissionierroboter mit einem Endeffektor nach einem der vorhergehenden Ansprüche und einer Steuereinheit, wobei die Steuereinheit dazu ausgelegt ist, einen Kommissionierauftrag zu empfangen, mit dem Ladungsträgergreifer (24) einen Zielladungsträger (30) von einer Fördertechnikspur (40c) auf einen Kommissionierplatz oder eine weitere Fördertechnikspur (40b) zu stellen und anschließend mit dem Artikelgreifer (18a, 18b) Artikel gemäß dem Kommissionierauftrag aus Quellladungsträger (28) zu entnehmen und in den Zielladungsträger (30) zu legen.

9. Verfahren zum Kommissionieren mit einem Kommissionierroboter nach Anspruch 8, wobei das Verfahren umfasst:
- Empfangen eines Kommissionierauftrags,
- Greifen eines auf einer Fördertechnikspur (40c) bereitstehenden Zielladungsträgers (30) mit dem Ladungsträgergreifer (24) und Abstellen des Zielladungsträgers (30) auf einen Kommissionierplatz oder auf eine weitere Fördertechnikspur (40b), und
- Entnehmen von Artikeln gemäß dem Kommissionierauftrag aus Quellbehältern (28) mit dem Artikelgreifer (18a, 18b) und Ablegen der Artikel in den Zielbehälter (30).

## Claims

1. An end effector for a commissioning robot with an elongated end effector main body (12) and an article gripper (18a) or a gripper carrier (14) with several article grippers (18a, 18b), wherein the end effector main body (12) has a proximal end for connection to a gripping arm of the commissioning robot and a distal end, wherein the article gripper (18a) or gripper carrier (14) is arranged at the distal end of the end effector main body (12), wherein between the proximal end and the distal end, a load carrier gripper (24) for gripping source load carriers (28) or target load carriers (30) is provided on a side surface (12a) extending in the longitudinal direction (Z) of the end effector main body (12), wherein the load carrier gripper (24) comprises at least one suction gripper (24a), **characterized in that** the suction direction of the suction gripper (24a) extends substantially perpendicular to the longitudinal direction (Z) of the end effector main body (12) and toward the side surface (12a), so that simultaneously the load carrier gripper (24) can grip an inner wall and the article gripper (18a) can additionally grip a bottom of source load carriers (28) or target load carriers (30).

2. An end effector according to claim 1, **characterized in that** the load carrier gripper (24) comprises at least two suction grippers (24a1, 24a2).

3. An end effector according to one of the preceding claims, **characterized in that** the load carrier gripper (24) comprises a gripping hook (24b) that is designed to engage in a handle (30a) or an undercut of the source load carrier (28) or target load carrier (30).

4. An end effector according to one of the preceding claims, **characterized in that** at the distal end of the end effector main body (12), a gripper carrier (14) with at least two article grippers (18a, 18b) is arranged, which can be activated or deactivated by a rotation of the gripper carrier (14).

5. An end effector according to claim 4, **characterized in that** exactly two article grippers (18a, 18b) are arranged in positions opposite to each other on the gripper carrier (14) with respect to the horizontal rotational or pivoting axis (X).

6. An end effector according to one of the preceding claims, **characterized in that** an interface (32) for connecting different types of load carrier grippers is provided on the end effector main body (12).

7. An end effector according to one of the preceding claims, **characterized in that** a valve (26) for switching a pressure or suction air supply between an actuation of the article gripper (18a, 18b) and an actuation of the load carrier gripper (24) is arranged within the end effector main body (12).

8. A commissioning robot with an end effector according to one of the preceding claims and a control unit, wherein the control unit is designed to receive a commissioning order, to place a target load carrier (30) from a conveyor track (40c) onto a commissioning place or another conveyor track (40b) with the load carrier gripper (24), and subsequently to remove articles according to the commissioning order from source load carriers (28) with the article gripper (18a, 18b) and to place them in the target load carrier (30).

9. A method for commissioning with a commissioning robot according to claim 8, wherein the method comprises:
receiving a commissioning order,
gripping a target load carrier (30) standing ready on a conveyor track (40c) with the load carrier gripper (24) and placing the target load carrier (30) on a commissioning place or on another conveyor track (40b), and
removing articles according to the commissioning order from source containers (28) with the article gripper (18a, 18b) and placing the articles in the target container (30).

## Revendications

1. Effecteur terminal pour un robot de préparation de commandes avec un corps principal d'effecteur terminal allongé (12) et un préhenseur d'article (18a) ou un support de préhenseur (14) avec plusieurs préhenseurs d'article (18a, 18b), dans lequel le corps principal d'effecteur terminal (12) présente une extrémité proximale pour le raccordement à un bras de préhension du robot de préparation de commandes et une extrémité distale, dans lequel le préhenseur d'article (18a) ou le support de préhenseur (14) est disposé à l'extrémité distale du corps principal d'effecteur terminal (12), dans lequel entre l'extrémité proximale et l'extrémité distale, un préhenseur de porte-charge (24) pour saisir des porte-charges source (28) ou des porte-charges cible (30) est prévu sur une surface latérale (12a) s'étendant dans la direction longitudinale (Z) du corps principal d'effecteur terminal (12), dans lequel le préhenseur de porte-charge (24) comprend au moins un préhenseur à aspiration (24a),
**caractérisé en ce que** la direction d'aspiration du préhenseur à aspiration (24a) s'étend sensiblement perpendiculairement à la direction longitudinale (Z) du corps principal d'effecteur terminal (12) et vers la surface latérale (12a), de sorte que simultanément le préhenseur de porte-charge (24) peut saisir une paroi intérieure et le préhenseur d'article (18a) peut en outre saisir un fond des porte-charges source (28) ou des porte-charges cible (30).

2. Effecteur terminal selon la revendication 1,
**caractérisé en ce que** le préhenseur de porte-charge (24) comprend au moins deux préhenseurs à aspiration (24a1, 24a2).

3. Effecteur terminal selon l'une des revendications précédentes,
**caractérisé en ce que** le préhenseur de porte-charge (24) comprend un crochet de préhension (24b) qui est conçu pour s'engager dans une poignée (30a) ou une contre-dépouille du porte-charge source (28) ou du porte-charge cible (30).

4. Effecteur terminal selon l'une des revendications précédentes,
**caractérisé en ce que** à l'extrémité distale du corps principal d'effecteur terminal (12), un support de préhenseur (14) avec au moins deux préhenseurs d'article (18a, 18b) est disposé, qui peuvent être activés ou désactivés par une rotation du support de préhenseur (14).

5. Effecteur terminal selon la revendication 4,
**caractérisé en ce que** exactement deux préhenseurs d'article (18a, 18b) sont disposés dans des positions opposées l'une à l'autre sur le support de préhenseur (14) par rapport à l'axe de rotation ou de pivotement horizontal (X).

6. Effecteur terminal selon l'une des revendications précédentes,
**caractérisé en ce que** une interface (32) pour connecter différents types de préhenseurs de porte-charge est prévue sur le corps principal d'effecteur terminal (12).

7. Effecteur terminal selon l'une des revendications précédentes,
**caractérisé en ce que** une vanne (26) pour commuter une alimentation en air comprimé ou en air d'aspiration entre une actuation du préhenseur d'article (18a, 18b) et une actuation du préhenseur de porte-charge (24) est disposée à l'intérieur du corps principal d'effecteur terminal (12).

8. Robot de préparation de commandes avec un effecteur terminal selon l'une des revendications précédentes et une unité de commande, dans lequel l'unité de commande est conçue pour recevoir un ordre de préparation de commandes, pour placer un porte-charge cible (30) depuis une voie de convoyage (40c) sur un poste de préparation de commandes ou une autre voie de convoyage (40b) avec le préhenseur de porte-charge (24), et ensuite pour prélever des articles conformément à l'ordre de préparation de commandes dans des porte-charges source (28) avec le préhenseur d'article (18a, 18b) et les placer dans le porte-charge cible (30).

9. Procédé de préparation de commandes avec un robot de préparation de commandes selon la revendication 8, dans lequel le procédé comprend :
la réception d'un ordre de préparation de commandes,
la saisie d'un porte-charge cible (30) se trouvant prêt sur une voie de convoyage (40c) avec le préhenseur de porte-charge (24) et le placement du porte-charge cible (30) sur un poste de préparation de commandes ou sur une autre voie de convoyage (40b), et
le prélèvement d'articles conformément à l'ordre de préparation de commandes dans des conteneurs source (28) avec le préhenseur d'article (18a, 18b) et le placement des articles dans le conteneur cible (30).
